# EUROPEAN PATENT APPLICATION

(11) **EP 4 411 850 A1**
(43) Date of publication of application: **07.08.2024**
(21) Application number: 24711108.1
(22) Date of filing: 02.02.2024
(51) Int. Cl.: H01M 4/06, H01M 50/109, H01M 6/14

(54) **BUTTON BATTERY**

(30) Priority: 06.02.2023 CN 202320122324 U
(71) Applicant: Eve Energy Co., Ltd., Huizhou, Guangdong 516006 (CN)
(72) Inventor: HAN, Dandan, Huizhou, Guangdong 516006 (CN); LIU, Zhihua, Huizhou, Guangdong 516006 (CN); ZHU, Yuan, Huizhou, Guangdong 516006 (CN); CAO, Lang, Huizhou, Guangdong 516006 (CN); SUN, Peiling, Huizhou, Guangdong 516006 (CN)
(74) Representative: Herrero & Asociados, S.L.
(86) International application number: PCT/CN2024/075469
(87) International publication number: WO 2024/114840

(57) **Abstract**

The present application discloses a button battery. The button battery includes a case 10, a positive electrode powder piece 400, and a current collector 300. The case 10 includes a positive electrode case 100 and a negative electrode case 200 interconnected. The positive electrode case 100 and the negative electrode case 200 are connected to define a cavity 101. The positive electrode powder piece 400 is disposed in the cavity 101. The current collector 300 is disposed in the cavity 101, the current collector 300 and the positive electrode powder piece 400 are stacked, and at least a part of the current collector 300 is embedded into the positive electrode powder piece 400. A side of current collector 300 away from the positive electrode powder piece 400 is contacted with a bottom of the positive electrode case 100.

## Description

This application claims priority to Chinese Patent Application No. 202320122324.7 filed with the Chinese Patent Office on February 06, 2023, the entire contents of which are incorporated herein by reference.

### TECHNICAL FIELD

The present application relates to the technical field of batteries, for example, to a button battery.

### BACKGROUND

The main components of the lithium manganese dioxide battery are a negative electrode case, a negative electrode, a separator, a positive electrode (including a positive electrode ring), a positive electrode case, and an electrolyte. Since the inner space of the cell is limited, the space occupied by the positive electrode and the negative electrode is limited, thereby limiting the capacity of the cell, that is, the service life.

At the present stage, a structure in which the positive electrode ring is used to wrap the positive electrode powder piece is mostly used in the lithium manganese button battery, which results in a larger space occupied by the positive electrode ring, thereby limiting the arrangement space of the positive electrode and the negative electrode, and causing a small cell capacity and a short service life.

Therefore, there is an urgent need to propose a button battery to solve the above problems.

### TECHNICAL SOLUTION

The present application provides a button battery in which the capacity of the cell is large and the service life is long.

According to a first aspect, an embodiment of the present application provides a button battery comprising a case including a positive electrode case and a negative electrode case interconnected, wherein the positive electrode case and the negative electrode case are connected to define a cavity; a positive electrode powder piece disposed in the cavity; and a current collector disposed in the cavity, wherein the current collector and the positive electrode powder piece are stacked, at least a part of the current collector is embedded into the positive electrode powder piece, and a side of current collector away from the positive electrode powder piece is contacted with a bottom of the positive electrode case.

In an embodiment, the current collector has a mesh structure.

In an embodiment, a surface of the current collector embedded in the positive electrode powder piece is a sanded or provided with a burr.

In an embodiment, a height of the current collector embedded in the positive electrode powder piece ranges from 50% to 95% of a total height of the current collector.

In an embodiment, the current collector comprises a plurality of current collector bars cross-disposed, the plurality of current collector bars defines the mesh structure, and the current collector bars intersect at the collector bar intersection, wherein a thickness of the collector bar intersection is greater than a thickness of each of the current collector bars.

In an embodiment, the current collector is made of nickel, aluminum or stainless steel.

In an embodiment, the positive electrode powder piece has a compaction density ranging from 2.0 g/mm³ to 3.0 g/mm³.

In an embodiment, a cross-section of the current collector and a cross-section of the positive electrode powder piece are circular, and a ratio of a diameter of the cross-section of the current collector to a diameter of the cross-section of the positive electrode powder piece ranges from 1:1 to 1:1.5.

In an embodiment, a mesh of the current collector has a rhombus shape, and a ratio of a short pitch a to a long pitch b of the rhombus shape ranges from 1:1 to 1:3.

In an embodiment, a surface of the positive electrode powder piece in contact with the current collector and a longitudinal section of the current collector are both wave-shaped, or the surface of the positive electrode powder piece in contact with the current collector and the longitudinal section of the current collector are both sawtooth-shaped.

### Advantageous benefits of the present application:

The button battery provided by the application defines the cavity accommodating the positive electrode powder piece and the current collector by assembling of the positive electrode case and the negative electrode case. By embedding at least part of the current collector into the positive electrode powder piece, the space occupied by the current collector in the case can be reduced, so that the volume of the positive electrode powder piece can be appropriately increased, the capacity of the cell can be increased, and the service life of the battery can be prolonged.

### BRIEF DESCRIPTION OF THE DRAWINGS

FIG. 1 is a schematic cross-sectional diagram of a button battery according to Embodiment 1 of the present application;
FIG. 2 is a schematic structural diagram of a roll-like current collector according to Embodiment 1 of the present application;
FIG. 3 is a schematic structural diagram of a current collector according to Embodiment 1 of the present application;
FIG. 4 is a s schematic exploded diagram of a current collector and a positive electrode powder piece according to Embodiment 1 of the present application; and
FIG. 5 is a schematic structural diagram of an assembly of a current collector and a positive electrode powder piece according to Embodiment 3 of the present application.

In the figures:
10. case; 101. cavity; 100. positive electrode case; 200. negative electrode case; 300. current collector; 310. current collector bar; 320. collector bar intersection; 400. positive electrode powder piece; 500. separator; 600. negative electrode plate; and 700. roll-like current collector.

### DETAILED DESCRIPTION OF THE EMBODIMENTS

In the description of the present application, it should be noted that the orientation or positional relationship indicated by the terms "center", "on", "under", "left", "right", "vertical", "horizontal", "inner", "outer", etc., is based on the orientation or positional relationship shown in the drawings, merely for purposes of describing the present application and simplifying the description, and not to indicate or imply that the devices or elements referred to must have a particular orientation, be constructed and operated in a particular orientation, and therefore should not be construed as limiting the application. Furthermore, the terms "first" and "second" are used for descriptive purposes only and are not to be construed as indicating or implying relative importance. The terms "first position" and "second position" are two different positions. The phase that the first feature is "on", "above", and "over" the second feature includes that the first feature is directly on and obliquely on the second feature, or merely indicates that the horizontal height of the first feature is greater than the horizontal height of the second feature. The phase that the first feature is "under", "below", and "down" the second feature includes that the first feature is directly under and obliquely under the second feature, or merely indicates that the horizontal height of the first feature is less than the horizontal height of the second feature.

In the description of the present application, it should be noted that, unless expressly stated and defined otherwise, the terms "mount", "link", "connect" are to be understood in a broad sense, for example, as a fixed connection, as a detachable connection, or as an integrated connection; as a mechanical connection or an electrical connection; as a directly connection, or an indirectly connection by means of an intermediate medium; and as an internal communication of the two elements. The meaning of the above terms in the present application may be understood by one of ordinary skill in the art as the case may be.

Embodiments of the present application are described below, examples of which are illustrated in the accompanying drawings, in which identical or similar reference numerals refer to identical or similar elements or elements having identical or similar functions throughout. The embodiments described below by reference to the accompanying drawings are exemplary and are merely illustrative of the present application, and are not to be construed as limiting the application.

### Embodiment

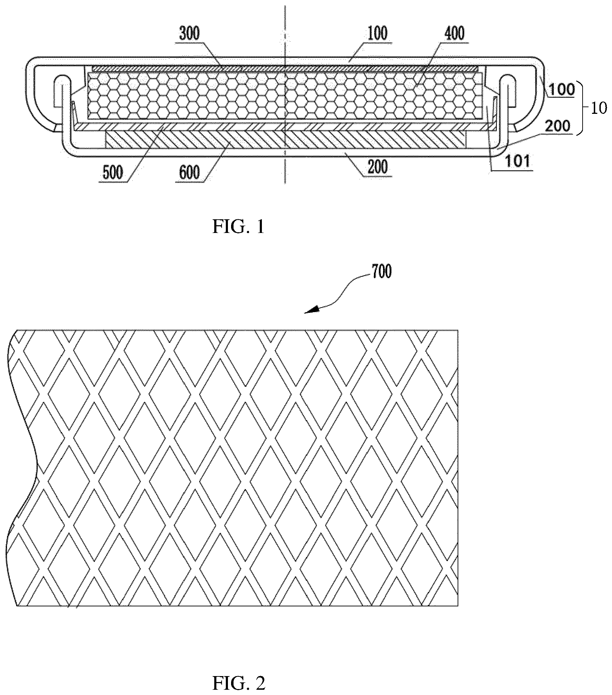

Referring to FIG. 1 and FIG. 2, the present embodiment provides a button battery. The button battery includes a case 10, a positive electrode powder piece 400, and a current collector 300. The case 10 includes a positive electrode case 100 and a negative electrode case 200 interconnected with each other, and the positive electrode case 100 and the negative electrode case 200 are connected to define a cavity 101. The positive electrode powder piece 400 is disposed in the cavity 101. The current collector 300 is disposed in the cavity 101, and the current collector 300 and the positive electrode powder piece 400 are stacked. At least a part of the current collector 300 is embedded into the positive electrode powder piece 400, and a side of the current collector 300 away from the positive electrode powder piece 400 is contacted with a bottom of the positive electrode case 100.

The above-described button battery defines the cavity 101 accommodating the positive electrode powder piece 400 and the current collector 300 by assembling the positive electrode case 100 and the negative electrode case 200. By embedding at least part of the current collector 300 into the positive electrode powder piece 400, the space occupied by the current collector 300 in the case 10 is less than that occupied by the positive electrode ring, so that the volume of the positive electrode powder piece 400 can be appropriately increased, the capacity of the cell can be increased, and the service life of the battery can be prolonged.

With continued reference to FIG. 1, the positive electrode case 100 and the negative electrode case 200 are snap-connected up and down, and the current collector 300, the positive electrode powder piece 400, the separator 500, and the negative electrode plate 600 are stacked in the case 10 from top to bottom.

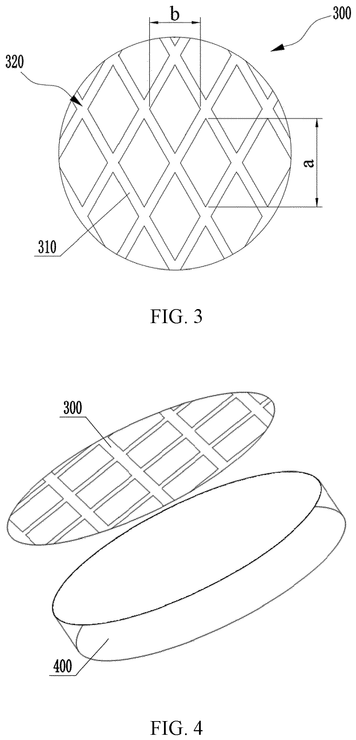

Referring to FIG. 2 and FIG. 3, alternatively, the current collector 300 has a mesh structure; alternatively, the current collector 300 has an integrally formed mesh structure. The mesh structure of the current collector 300 facilitates the embedding of the current collector 300 into the positive electrode powder piece 400, while facilitating the press-fit of the current collector 300 and the positive electrode powder piece 400 to provide a stronger connection therebetween. Alternatively, in this embodiment, the current collector 300 is supplied in the roll-like form; and before the button battery is assembled, the roll-like current collector 700 needs to be unfolded into a plane and punched into the current collector 300 in circular-plate shape by using an automatic screen punching device.

According to the characteristics of the positive electrode powder piece 400, the surface on which the current collector 300 is embedded into the positive electrode powder piece 400 is sanded or provided with a burr, thereby increasing the bonding force between the current collector 300 and the positive electrode powder piece 400, and preventing the separation of the current collector 300 and the positive electrode powder piece 400.

The height of the current collector 300 embedded in the positive electrode powder piece 400 ranges from 50% to 95% of the total height of the current collector 300. Illustratively, the height of the current collector 300 embedded in the positive electrode powder piece 400 may be 50%, 60%, 80%, or 95%, etc. of the total height of the current collector 300. It should be understood that the height of the current collector 300 embedded in the positive electrode powder piece 400 may be set in accordance with parameters such as the thickness of the positive electrode powder piece 400, the size of the cavity 101, and the like, and is not limited herein. By embedding a part of the current collector 300 into the positive electrode powder piece 400, the space occupied by the current collector 300 in the cavity 101 can be reduced, so that the volume of the positive electrode powder piece 400 can be appropriately increased, thereby increasing the capacity of the cell and prolonging the life of the battery.

The current collector 300 includes a plurality of current collector bars 310 cross-disposed, the plurality of current collector bars 310 defines the mesh structure, and the current collector bars 310 intersect at the collector bar intersection 320. The thickness of the collector bar intersection 320 is greater than the thickness of the current collector bars 310. In the present embodiment, the thickness of the collector bar intersection 320 is set to be from 1.2 to 1.5 times of the thickness of the collector bar 310; and illustratively, the thickness of the collector bar intersection 320 may be 1.2 times, 1.3 times, 1.4 times or 1.5 times of the thickness of the collector bar 310. Increasing the thickness of the collector bar intersection 320 may increase the structural strength of the collector 300, preventing damage to the current collector 300 during assembly or use.

The mesh of the current collector 300 has a rhombus shape, and the ratio of the long pitch a to the short pitch b of the rhombus shape ranges from 1:1 to 1:3; and illustratively, the ratio may be 1: 1, 1: 2, 1: 3, or the like, and the ratio may be selected according to the type of the battery. The arrangement of the mesh allows the current collector 300 to be more easily pressed into the positive electrode powder piece 400, thereby reducing the processing difficulty.

The material of the current collector 300 is nickel, aluminum or stainless steel. The selection of the material of the current collector 300 affects the pulse capacity of the cell. The current collector 300 selects the material as nickel or aluminum, to provide a strong performance in high current pulses.

The positive electrode powder piece 400 is mostly made of manganese powder. In order to better combine the current collector 300, the compaction density of the positive electrode powder piece 400 ranges from 2.0 g/mm³ to 3.0g/mm³; and illustratively, the compaction density of the positive electrode powder piece 400 may be 2.0g/mm³, 2.5g/mm³, 3.0g/mm³, or other values.

Both the current collector 300 and the positive electrode powder piece 400 are circular in cross-section, and the ratio of the diameter of the cross-section of the current collector 300 to the diameter of the cross-section of the positive electrode powder piece 400 ranges from 1:1 to 1:1.5; and illustratively, the ratio may be 1: 1, 1:1.2, 1:1.5, or other ratios. The current collector 300 and the positive electrode powder piece 400 may be placed concentrically, and the cross-sectional area of the current collector 300 is less than the cross-sectional area of the positive electrode powder piece 400, thereby ensuring that the current collector 300 can be embedded in the positive electrode powder piece 400.

The assembling process of the button battery in this embodiment is as follows.

Referring to FIG. 4, the current collector 300 is press-fitted and embedded into the positive electrode powder piece 400 by a tablet press to form a positive electrode. The negative electrode plate 600 is loaded into the negative electrode case 200, the cut separator 500 is covered on the negative electrode plate 600, and the electrolyte is added dropwise above the separator 500. After the dropwise addition is completed, the positive electrode powder piece 400 is placed on the separator 500, and the positive electrode case 100 is snapped and connected to the negative electrode case 200, to encapsulate into a battery having a sealing property.

### Embodiment

The configuration of the button battery according to the present embodiment is the same as that of the first embodiment, except that the assembly process of the battery. The following describes only the assembly process of the button battery according to the present embodiment.

The negative electrode plate 600 is loaded into the negative electrode case 200, the cut separator 500 is covered on the negative electrode plate 600, and the electrolyte is added dropwise above the separator 500. After the dropwise addition is completed, the positive electrode powder piece 400 is placed on the separator 500, the current collector 300 is placed on the positive electrode powder piece 400, and the positive electrode case 100 is snapped and sealed to the negative electrode case 200. The current collector 300 is embedded into the positive electrode powder piece 400 by pressure generated after the positive electrode case 100 and the negative electrode case 200 are snapped and connected.

### Embodiment

The configuration of the button battery according to the present embodiment is the same as that of the first embodiment, except that the assembly process of the battery. The following describes only the assembly process of the button battery according to the present embodiment.

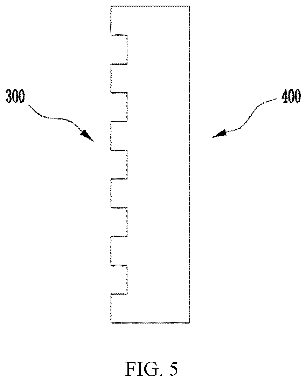

Referring to FIG. 5, the current collector 300 is press-fitted and embedded into the positive electrode powder piece 400 by a tablet press to form a positive electrode. The die for pressing the current collector 300 and the positive electrode powder piece 400 on the tablet press is wave-shaped or sawtooth-shaped, so that the surface of the positive electrode powder piece 400 in contact with the current collector 300 and the longitudinal section of the current collector 300 are both wave-shaped, or the surface of the positive electrode powder piece 400 in contact with the current collector 300 and the longitudinal section of the current collector 300 are both sawtooth-shaped. The bonding force of the current collector 300 and the positive electrode powder piece 400 can be increased by the use of the wave-shaped or sawtooth-shaped die, to prevent the separation of the current collector 300 and the positive electrode powder piece 400. The negative electrode plate 600 is loaded into the negative electrode case 200, the cut separator 500 is covered on the negative electrode plate 600, and the electrolyte is added dropwise above the separator 500. After the dropwise addition is completed, the positive electrode powder piece 400 is placed on the separator 500, and the positive electrode case 100 is snapped and connected to the negative electrode case 200, to encapsulate into a battery having a sealing property.

## Claims

1. A button battery, comprising:
a case (10) including a positive electrode case (100) and a negative electrode case (200) interconnected, wherein the positive electrode case (100) and the negative electrode case (200) are connected to define a cavity (101);
a positive electrode powder piece (400) disposed in the cavity (101); and
a current collector (300) disposed in the cavity (101), wherein the current collector (300) and the positive electrode powder piece (400) are stacked, at least a part of the current collector (300) is embedded into the positive electrode powder piece (400), and a side of current collector (300) away from the positive electrode powder piece (400) is contacted with a bottom of the positive electrode case (100).

2. The button battery of claim 1, wherein the current collector (300) has a mesh structure.

3. The button battery of claim 1, wherein a surface of the current collector (300) embedded in the positive electrode powder piece (400) is a sanded or provided with a burr.

4. The button battery of claim 1, wherein a height of the current collector (300) embedded in the positive electrode powder piece (400) ranges from 50% to 95% of a total height of the current collector (300).

5. The button battery of claim 2, wherein the current collector (300) comprises a plurality of current collector bars (310) cross-disposed, the plurality of current collector bars (310) defines the mesh structure, and the current collector bars (310) intersect at the collector bar intersection (320), wherein a thickness of the collector bar intersection (320) is greater than a thickness of each of the current collector bars (310).

6. The button battery of claim 1, wherein the current collector (300) is made of nickel, aluminum or stainless steel.

7. The button battery of claim 1, wherein the positive electrode powder piece (400) has a compaction density ranging from 2.0 g/mm³ to 3.0 g/mm³.

8. The button battery of claim 1, wherein a cross-section of the current collector (300) and a cross-section of the positive electrode powder piece (400) are circular, and a ratio of a diameter of the cross-section of the current collector (300) to a diameter of the cross-section of the positive electrode powder piece (400) ranges from 1:1 to 1:1.5.

9. The button battery of claim 2, wherein a mesh of the current collector (300) has a rhombus shape, and a ratio of a short pitch a to a long pitch b of the rhombus shape ranges from 1:1 to 1:3.

10. The button battery of any one of claims 1 to 9, wherein a surface of the positive electrode powder piece (400) in contact with the current collector (300) and a longitudinal section of the current collector (300) are both wave-shaped, or the surface of the positive electrode powder piece (400) in contact with the current collector (300) and the longitudinal section of the current collector (300) are both sawtooth-shaped.
